# EUROPÄISCHE PATENTSCHRIFT

(11) **EP 1 573 974 B1**
(45) Veröffentlichungstag und Bekanntmachung des Hinweises auf die Patenterteilung: **19.07.2006**
(21) Anmeldenummer: 03813878.0
(22) Anmeldetag: 20.11.2003
(51) Int. Cl.: H04L 12/403, H04L 29/12, B60R 16/02

(54) **AUTOMATISCHE ADRESSIERUNG AUF BUSSYSTEMEN**
AUTOMATIC ADDRESSING ON BUS SYSTEMS
ADRESSAGE AUTOMATIQUE SUR DES SYSTEMES DE BUS

(30) Priorität: 20.12.2002 DE 10261174
(43) Veröffentlichungstag der Anmeldung: 14.09.2005
(73) Patentinhaber: DaimlerChrysler AG, 70567 Stuttgart (DE)
(72) Erfinder: VINNEMANN, Thomas, 70184 Stuttgart (DE)
(86) Internationale Anmeldenummer: PCT/EP2003/012986
(87) Internationale Veröffentlichungsnummer: WO 2004/059917

(56) Entgegenhaltungen:
- EP-A- 1 298 851
- DE-A- 10 038 783
- DE-A- 19 621 272
- FR-A- 2 214 385
- US-A- 5 583 754

## Beschreibung

Die Erfindung betrifft ein Verfahren zur automatischen Adressvergabe von an ein Bussystem angeschlossenen Steuergeräten in einem Verkehrsmittel, wobei die Steuergeräte Daten mittels Sende-/Empfangseinheiten über eine gemeinsame Datenbusleitung austauschen und die Steuergeräte gleichzeitig auf die, mittels der gemeinsamen Datenbusleitung, gesendeten Daten zugreifen. Zudem betrifft die Erfindung ein Bussystem zur Durchführung des Verfahrens.

Um bei Datenbussystemen die Kommunikation zwischen Steuergeräten zu ermöglichen, müssen diese eine individuelle Adresse aufweisen. Diese jeweils individuelle Adresse erlaubt den Steuergeräten bzw. den Teilnehmern des Datenbussystems Nachrichten bzw. Daten untereinander auszutauschen. Insbesondere können Nachrichten direkt an beliebige Teilnehmer des Datenbussystems verschickt werden. Zudem kann im Regelfall der Absender einer Nachricht ermittelt werden.

Bei der Adresseinstellung oder -vergabe muss darauf geachtet werden, dass die korrekten Adressen an die entsprechenden Teilnehmer vergeben werden. Dieselben Adressen dürfen nicht mehrfach an verschiedene Teilnehmer vergeben werden, um Störungen zu vermeiden. Die Aufnahme eines weiteren Teilnehmers in das Datenbussystem und die damit verbundene Adresserweiterung sollte einfach handhabbar sein.

"Daisy-Chain"-Verbindungen werden häufig in Datenbussystemen von Verkehrsmitteln eingesetzt, um die_ an das Datenbussystem angebundenen Steuergeräte zu konfigurieren, insbesondere Adresseinstellungen vorzunehmen.

Eine "Daisy-Chain"-Verbindung ist eine individuelle Datenleitung in Form einer Punkt-zu-Punkt-Verbindung, die als Reihen- oder Ringverbindung zwischen einer zentralen Steuereinheit, dem sogenannten Master, und den weiteren Teilnehmern, den sogenannten Slaves, der "Daisy-Chain"-Verbindung ausgebildet ist. Die "Daisy-Chain"-Verbindung zeichnet sich dadurch aus, dass ein von der zentralen Verarbeitungseinheit ausgehendes Signal auf der Datenleitung nur den ersten Teilnehmer erreicht, von diesem zum nächsten Teilnehmer weitergereicht wird, der wiederum das Signal zum nächsten Teilnehmer weiterreicht usw. Alle Teilnehmer können identische Signale empfangen, indem die Signale beim Weiterreichen nicht verändert werden. Zudem kann im Gegensatz zu anderen Bussystemen jeder Teilnehmer in der Kette ein oder mehrere Signale ändern, bevor er das Signal weiterleitet. Durch das zeitversetzte Weiterleiten können mehrere Botschaften auf der "Daisy-Chain"-Verbindung weitergeleitet werden, so kann z.B. der zweite Teilnehmer an den dritten Teilnehmer ein elektrisches Signal weiterleiten, während der Master an den ersten Teilnehmer schon das nächste Signal sendet.

In der "Daisy-Chain"-Verbindung läuft im Allgemeinen der Signalrückführungspfad direkt vom letzten Slave in der Kette zum Master. Auf dem Signalrückführungspfad ist eine unidirektionale Kommunikation zugelassen. Der Signalrückführungspfad kann aber auch am letzten Teilnehmer über einen Widerstand abgeschlossen sein, wobei die Datenleitungen dann bidirektional ausgebildet sein sollten.

Teilnehmer einer "Daisy-Chain"-Verbindung verfügen über mindestens zwei Schnittstellen zum Datenaustausch bzw. zur Kommunikation über das Bussystem. Eine der beiden Schnittstellen, insbesondere die erste Schnittstelle, ist als Kommunikationsschnittstelle zum Empfangen von Daten eines in der "Daisy-Chain"-Verbindung vorgeschalteten Teilnehmers ausgebildet. Die zweite Schnittstelle eines Teilnehmers ist als Kommunikationsschnittstelle zur Verbindung mit einem nachgeschalteten Teilnehmer im Bussystem vorgesehen. Ist die "Daisy-Chain"-Verbindung bidirektional, müssen die Kommunikationsschnittstellen ebenfalls bidirektional ausgerichtet sein.

Ein Bussystem, welches mittels einer "Daisy-Chain"-Verbindung aufgebaut ist, kann nur eine Kommunikation von Master zum Slave bzw. vom Slave zum Master zur Verfügung stellen. Eine eigenständige Kommunikation zwischen den Slaves, also den Teilnehmern des Bussystems, ist nicht vorgesehen.

Aufgrund der Tatsache, dass in einer "Daisy-Chain"-Verbindung die Signale von Teilnehmer zu Teilnehmer abschnittsweise weitergereicht werden, wird die "Daisy-Chain"-Verbindung oft als "nicht gemeinsam benutzte Verbindung" bezeichnet. Im Gegensatz hierzu sind "gemeinsam benutzte Verbindungen" solche, auf welche die Teilnehmer gleichberechtigt zugreifen können und alle Teilnehmer, aufgrund der galvanischen bzw. optischen Verbindung zur Datenleitung, gleichzeitig Daten empfangen können, wie dies beispielsweise im Control Areä Network (CAN) Protokoll umgesetzt ist.

Oft erfolgt die Adresskonfiguration der Teilnehmer eines beliebigen Bussystems über ein (Teil-)Bussystem, welches aus einer "Daisy-Chain"-Verbindung, also einer nicht gemeinsam benutzten Verbindung, aufgebaut ist. Die Datenkommunikation zwischen den Teilnehmern des Datenbussystems erfolgt über eine zusätzliche, gemeinsam benutzte Verbindung, welche die gleichberechtigte individuelle Kommunikation aufgrund des eigentlichen Datenprotokolls zwischen den Teilnehmer ermöglicht.

Aus der DE 100 38 783 ist ein Verfahren und eine Vorrichtung zur automatischen Adressvergabe an eine Mehrzahl von Teilnehmern in einem Bussystem mit "Daisy-Chain"-Verbindung offenbart. Jeder Slave-Teilnehmer hinterlegt bei Erhalt eines unverkennbaren, eindeutigen Kommandos seitens des Masters in einem an der ersten Kommunikations-Schnittstelle empfangenen Datenpaket für eine Adressvergabe den als Adresse zu interpretierenden Teil in einem vom jeweiligen Teilnehmer zugreifbaren Adressspeicher und leitet das Datenpaket mit dem gleichen Kommando und einem veränderten Adresswert über die zweite Schnittstelle an einen benachbarten Teilnehmer weiter.

Die DE 37 36 081 A1 offenbart ein Verfahren und eine Vorrichtung zur Adresseinstellung von an einen Bus angeschlossenen Teilnehmern. Die Teilnehmer sind über einen Bus mit einer zentralen Verarbeitungseinheit verbunden. Zusätzlich sind die Teilnehmer des Busses über eine von der zentralen Verarbeitungseinheit ausgehenden "Daisy-Chain"-Verbindung in Reihe geschaltet. Die Adresseinstellung der Teilnehmer erfolgt mittels der "Daisy-Chain"-Verbindung. Durch ein Signal mit einem bestimmten binären Wert auf der "Daisy-Chain"-Verbindung am Eingang des ersten Teilnehmers nimmt dieser von einem in der zentralen Verarbeitungseinheit erzeugten Datenpaket auf dem Bus eine verfügbare Adresse auf und beaufschlagt ausgangsseitig die "Daisy-Chain"-Verbindung mit dem bestimmten binären Wert. Der Teilnehmer sendet der zentralen Verarbeitungseinheit als Antwort die aufgenommene Adresse. Das Verfahren wird nun am benachbarten Teilnehmer fortgesetzt.

Die US-A-5 583 754 und die FR-A-2 214 385 beschreiben jeweils ein gattungsgemäßes Datenbussystem mit einem zentralen Steuergerät und peripheren Komponenten.

Die DE 196 21 272 A1 offenbart eine Adressierungsvorrichtung für eine Nebenstation eines seriellen Bussystems und ein Verfahren zur Adressierung einer Nebenstation. Die Nebenstationen enthalten eine Schaltvorrichtung, die in die Datenleitung zur nachfolgenden Nebenstation eingekoppelt ist, um die Datenleitung abhängig von einem Schaltsignal der Steuereinrichtung zu unterbrechen.

Es ist nun die Aufgabe der vorliegenden Erfindung ein Verfahren und ein Bussystem zu schaffen, welches die automatische Adressvergabe in einem Bussystem mit einer gemeinsamen Datenleitung optimiert.

Diese Aufgabe wird erfindungsgemäß durch die Merkmale des Anspruchs 1 gelöst. Hierzu wird ein Zeitraum einer Adressvergabe mittels einer Nachricht auf der gemeinsam benutzten Datenbusleitung gestartet. Danach wird aufgrund der Nachricht im Zeitraum der Adressvergabe die gemeinsame Datenbusleitung in einzelne Teilabschnitte galvanisch getrennt, indem die zu adressierenden Steuergeräte jeweils mittels eines Trennmittels die gemeinsame Datenbusleitung galvanisch auftrennen. Zudem legen die zu adressierenden Steuergeräte ihre jeweilige Sendeeinheit auf ein Sendepotenzial.

Der Begriff Datenbusleitung umfasst je nach gewähltem Bussystem Ein- oder Zwei- oder Mehrdraht-Datenleitungen.

Das gleichzeitige Empfangen von auf dem Datenbus gesendeten Daten mittels der Steuergeräte, steht nicht für absolut gleichzeitiges Empfangen, sondern für Empfang in einem Zeitintervall, welches die Ausbreitung der elektromagnetischen Welle auf der Datenbusleitung berücksichtigt.

Vorteilhaft ist, dass eine gemeinsame Datenbusleitung für den Zeitraum der Adressvergabe in einzelne Teilabschnitte aufgespalten wird, so dass sich zwischen den zu adressierenden Steuergeräten als Busteilnehmer eine Topologie einer "Daisy-Chain"-Verbindung, insbesondere einer "nicht gemeinsam benutzten" Verbindung, ergibt.

Da die gemeinsame Datenbusleitung zur Adressierung eingesetzt wird, ist keine zusätzliche Datenbusleitung zwischen den Steuergeräten erforderlich. Zudem müssen die Steuergeräte nicht mit einem weiteren Busprotokoll ausgestattet werden, um über die zusätzliche Datenbusleitung zur Adressierung kommunizieren zu können. Standard-Steuergeräte, bei denen mittels des erfindungsgemäßen Verfahrens die Adresseinstellung vorgenommen werden soll, müssen damit nur minimal verändert werden.

Das Verfahren hat insbesondere den Vorteil, dass es auch bei Bussystemen mit gleichberechtigten Teilnehmern, also kein Master/Slave-System wie oben beschrieben, eingesetzt werden kann. Die Adressvergabe muss lediglich von einem Steuergerät mittels eines Signals angestoßen werden.

Das Verfahren hat zudem den Vorteil, dass im Gegensatz zu bekannten Adressierungsverfahren, der Master an beliebiger Position im Bussystem positioniert werden kann. Der Master muss also nicht am Anfang bzw. Ende der Datenbusleitung positioniert sein, wie dies bei einer "Daisy-Chain"-Verbindung der Fall ist. Dies liegt daran, dass das Startsignal zur Adressvergabe zu einem Zeitpunkt erfolgt, in dem die gemeinsame Verbindung allen Steuergeräten zur Verfügung steht.

Da der Master beliebig im Bussystem positionierbar ist, kann die Adressvergabe in einfacher Weise auf weitere Steuergeräte in dem bestehende Bussystem erweitert werden. Beispielsweise können bei in Reihe angeordneten Steuergeräten und einem an beliebiger Position angebrachten Master die Steuergeräte rechts und/oder links des Masters in die Adressvergabe eingebunden werden.

Ein weiterer Vorteil ist, dass das Verfahren zur Adresseinstellung in Bussystemen eingesetzt werden kann, bei dem nicht alle Steuergeräte des Bussystems an dem Adressierungsverfahren teilnehmen, also beispielsweise bereits standardmäßig konfigurierte Steuergeräte auf dem Bussystem vorhanden sind. Dies ist insbesondere dadurch gewährleistet, dass nur zu adressierende Steuergeräte am Verfahren teilnehmen.

Das Verfahren ist ebenfalls anwendbar, wenn ein weiteres, zu adressierendes Steuergerät dem Bussystem hinzugefügt oder entfernt wird, da bei der Adressvergabe alle zu adressierenden Steuergeräte teilnehmen.

Das Verfahren ist nicht nur auf Bussysteme in Reihenschaltung beschränkt. Vielmehr kann es insbesondere auch auf Bussystemen mit ringförmiger Struktur eingesetzt werden.

Das Einschalten und das Senden eines Signals von der Sendeeinheit des zu adressierenden Steuergeräts ist von Vorteil, da hiermit das Vorhandensein einer elektrischen Kenngröße zur Bestimmung, ob ein weiteres, zu adressierendes Steuergerät auf der Datenbusleitung vorhanden ist, sichergestellt wird.

Die zuzuweisende Adresse ist unabhängig von der Position des Teilnehmers in dem Bussystem, da die Prüfung, ob ein weiteres nachgeschaltetes zu adressierendes Steuergerät vorhanden ist, nach einer individuell für jedes zu adressierende Steuergerät festgelegten Zeit T_{SG} erfolgt. Damit wird die zuzuweisende Adresse ebenfalls unabhängig von der Position des Steuergeräts an das Steuergerät übertragen. Es ist also keine Adressvergabe, wie beispielsweise aufsteigende Adresse, gemäß Reihenfolge der Position der Steuergeräte im Bussystem notwendig.

Vorteilhaft ist, dass das Verfahren nicht nur bei Bussystemen mit Ein- sondern auch mit Zweidraht-Datenleitungen angewendet werden kann, da als elektrische Kenngröße ein Differenzspannungspegel am Ausgang zum nachgeschalteten Steuergerät bestimmt wird, wie er zur Bestimmung einer Signalübermittlung gemäß dem jeweiligen Bussystem auf der Datenbusleitung erfolgt.

So kann das Verfahren in einem Bussystem nach dem LIN-(Local Interconnect Network)-Standard eingesetzt werden. Gemäß dem LIN-Protokoll ist als Datenbusleitung eine Eindraht-Datenleitung zur Signal- bzw. Datenübermittlung vorgesehen. Die Signalübermittlung bzw. -auswertung erfolgt im LIN-Bus durch Bestimmung des Differenzspannungspegels zwischen der LIN- bzw. Eindraht-Datenleitung und dem Massepotenzial.

Das Verfahren kann ebenso in einem Bussystem mit Zweidraht-Datenleitung, wie beispielsweise einem CAN-(Controller Area Network)-Datenbus, eingesetzt werden. Zur Signalauswertung auf einem CAN-Bus wird die Spannungsdifferenz zwischen den beiden Datenleitungen gemessen, welche in dem Verfahren als elektrische Kenngröße ausgewertet wird.

Ein Vorteil der Erfindung besteht darin, dass im Falle einer Eindraht-Datenleitung als elektrische Kenngröße der Strom auf der Datenleitung am Ausgang zum nachgeschalteten Steuergerät gemessen wird, da eine Strommessung einfach im Steuergerät umzusetzen ist.

Es ist vorteilhaft erkannt worden, dass bei Vorhandensein eines nachgeschalteten, zu adressierenden Steuergeräts, die Datenleitung in dem einen, zu adressierenden Steuergerät mittels des Trennmittels wieder geschlossen wird und die Sendeeinheit des einen, zu adressierenden Steuergeräts abgeschalten wird. Damit gibt ein zu adressierendes Steuergerät, die Adresseinstellungsmöglichkeit an ein weiteres, zu adressierendes Steuergerät weiter. Mit Hilfe dieses Schritts kann ein einzelnes Steuergerät zur Adresseinstellung ermittelt werden. Der Schritt optimiert somit das Verfahren.

Vorteilhaft ist die Ausgestaltung des Trennmittels als schaltbare Verbindung, wie Schalttransistor oder Relais oder Repeater, welche kostengünstig auf dem aktuellen Markt zur Verfügung stehen.

Ein weiterer Vorteil des Verfahrens ist, dass es auch in optischen Bussystemen eingesetzt werden kann, indem Repeater als Trennmittel eingesetzt werden.

Dadurch, dass Steuergeräte, welche nicht an der Adressierung teilnehmen, im Zeitraum der Adressvergabe keine Daten auf die Datenbusleitung senden, wird verhindert, dass die Adressvergabe gestört wird. Insbesondere erlaubt dieses Verfahren die Adressvergabe auf die teilnehmenden, zu adressierenden Steuergeräte zu beschränken.

Vorteilhaft ist erkannt worden, dass im Zeitraum der Adressvergabe kein Steuergerät in der Lage ist, ein Signal zum Durchschalten der Steuergeräte, also zum Schließen der getrennten Datenleitung, an alle Steuergeräte zu senden, da ja die Datenbusleitung teilweise unterbrochen ist. Aus diesem Grund ist der Zeitraum der Adressvergabe auf eine Zeit T_{MAX} begrenzt. Die an der Adressvergabe teilnehmenden Steuergeräte stellen durch erneutes Verbinden der getrennten Datenbusleitung nach der Zeit T_{MAX}, welche jedem teilnehmenden Steuergerät bekannt ist, die gemeinsame Datenbusleitung wieder her.

Vorteilhafterweise enthält das Startsignal bereits die zu vergebende Adresse, so dass kein weiteres Signal eines Steuergeräts für die weiteren, zu adressierenden Steuergeräte notwendig ist.

Vorteilhaft ist erkannt worden, dass der Zeitraum der Adressvergabe als Teil eines Adressierungszyklusses ausgeführt wird und mittels einer automatischen Ablaufsteuerung wiederholt gestartet wird, bis an allen zu adressierenden Steuergeräte eine Adresseinstellung vorgenommen wurde.

Die automatische Ablaufsteuerung hat den Vorteil, dass diese über ein Steuergerät nur einmalig vorgenommen werden muss. Danach starten die Steuergeräte selbsttätig nach einer bestimmten Zeit T_{ZYK} erneut den Zeitraum der Adressvergabe. Hierbei muss T_{ZYK} größer als T_{MAX} gewählt werden, da ein Zeitraum der Adressvergabe erst abgeschlossen sein muss, bevor ein weiterer Zeitraum zur erneuten Adressvergabe gestartet wird.

Die automatische Ablaufsteuerung kann auch dadurch erfolgen, dass ein Steuergerät den Zeitraum zur Adressvergabe automatisch wiederholt startet und entsprechend mit jedem Startsignal eine zu vergebende Adresse übermittelt.

Die Aufgabe wird auch durch ein Bussystem nach Anspruch 12 gelöst. Danach weist die Messanordnung Mittel zum Steuern des Trennmittels und der Sende-/Empfangseinheit des einen Steuergeräts auf, wobei die Mittel zum Steuern aufgrund der Auswertung der Messsignale das Trennmittel sowie die Sende-/Empfangseinheit steuert.

Vorteilhaft ist, dass durch das Durchschleifen der Datenbusleitung durch das Steuergerät verbunden mit dem im Steuergerät vorhandenen Trennmittel, das Steuergerät in der Lage ist eine gemeinsame Datenbusleitung zu trennen und auch wieder durchzuverbinden.

Ein weiterer Vorteil ist, dass die vorzunehmenden Änderungen mit einem minimalen Kostenaufwand bei Standard-Steuergeräten, welche bereits auf dem Markt im Einsatz sind, umgesetzt werden kann.

Als ein Vorteil ist erkannt worden, dass die Weiterbildung der Messanordnung ein Vergleichsmittel aufweist, welches durch einen einfachen Vergleich von Eingangssignalen ein Ausgangssignal erzeugt, welches wiederum zur Steuerung der Sende-/Empfangseinheit und des Trennmittels eingesetzt wird.

Bevorzugt ist das Vergleichsmittel aufgrund seiner Schaltgeschwindigkeit als Komparatorschaltung ausgebildet.

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung einer Ausführungsform zu verweisen. Es sollen auch die vorteilhaften Ausgestaltungen einbezogen sein, die sich aus einer beliebigen Kombination der Unteransprüche ergeben. In den Zeichnungen ist eine erfindungsgemäße Vorrichtung zur Durchführung des erfindungsgemäßen Verfahrens dargestellt. Es zeigen jeweils in schematischer Darstellung,
- Fig. 1: ein erfindungsgemäßes Bussystem zur Durchführung des erfindungsgemäßen Verfahrens und
- Fig. 2: ein Steuergerät mit erfindungsgemäßer Messanordnung.

Die Erfindung betrifft ein Verfahren zur automatischen Adressvergabe von an ein Bussystem 1 angeschlossenen Steuergeräten 3-6 in einem Verkehrsmittel, wobei die Steuergeräte 3-6 Daten mittels Sende-/Empfangseinheiten 10 über eine gemeinsame Datenbusleitung 2 austauschen und die Steuergeräte 3-6 gleichzeitig auf die, mittels der gemeinsamen Datenbusleitung 2, gesendeten Daten zugreifen. Hierzu wird ein Zeitraum einer Adressvergabe mittels einer Nachricht auf der gemeinsamen Datenbusleitung 2 gestartet. Danach wird aufgrund der Nachricht im Zeitraum der Adressvergabe die gemeinsame Datenbusleitung 2 in einzelne Teilabschnitte galvanisch aufgetrennt, indem die zu adressierenden Steuergeräte 4-6 jeweils mittels eines Trennmittels 9 die gemeinsame Datenbusleitung 2 galvanisch auftrennen. Zudem legen die zu adressierenden Steuergeräte 4-6 ihre jeweilige Sendeeinheit 10 auf ein Sendepotenzial.

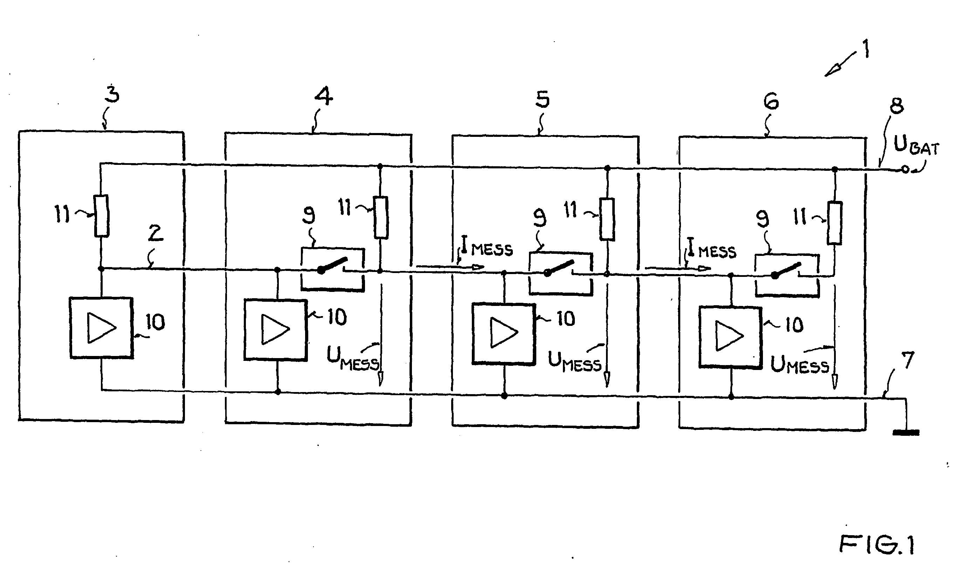

Die Figur 1 weist ein Bussystem 1 im LIN-Standard (Local Interconnect Network - http://www.lin-subbus.org) mit Datenbusleitung und Steuergeräten 3-6 auf, wobei es sich bei den Steuergeräten 3-6 um Motorsteuergeräte für Klimaanwendungen im Fahrzeug handelt. Die Kommunikation zwischen den Steuergeräten 3-6 erfolgt gemäß dem LIN-Protokoll gleichberechtigt auf der gemeinsamen Datenbusleitung.

Die Datenbusleitung ist gemäß dem LIN-Standard, also als Eindraht-Leitung aufgebaut. Die Datenbusleitung enthält neben der Eindraht-Leitung, also der eigentlichen Daten- bzw. LIN-Leitung 2, eine Spannungsversorgungsleitung 8 und eine Leitung 7, welche mit dem Massepotenzial belegt ist. Mittels dem an der Datenleitung 2 zur Masseleitung 7 gemessenen Differenzspannungspegel U_{MESS}, werden elektrische Signale gemäß dem LIN-Protokoll übermittelt und ausgewertet. Die auf der Datenleitung 2 gesendeten Daten bzw. Nachrichten können von den Steuergeräten 3-6 zeitgleich empfangen werden.

Die Datenleitung 2 ist bidirektional ausgelegt. Da es sich um den LIN-Standard handelt, ist die Datenleitung 2 am letzten Teilnehmer des Bussystems 1, Steuergerät 6, nicht terminiert.

Die Datenleitung 2 zur Verbindung zwischen den teilnehmenden Steuergeräte 3-6 ist derart geführt, dass diese durch die Steuergeräte 3-6 durchgeführt wird. Die Datenleitung ist also zwischen Ein- und Ausgang des Steuergeräts durchverbunden.

Die Steuergeräte 3-6 in Figur 1 weisen als Sende-/Empfangseinheit 10 einen LIN-Transceiver bzw. LIN-Bustreiber auf, welche für die protokollgemäße Umsetzung der Daten auf die Datenleitung 2 sorgen. Die Sende-/Empfangseinheit bzw. der LIN-Transceiver 10 wird innerhalb des Steuergeräts 3-6 an die Datenleitung 2 angebunden. Zudem verfügen die Steuergeräte 3-6 über eine Spannungsversorgung und einen Mikrocontroller zur Erfüllung ihrer funktionsbedingten Aufgaben.

Für die Zeit der Adressvergabe übernimmt das Steuergerät 3 die Funktion des Master-Steuergeräts und die Steuergeräte 4-6 die Funktion der Slave-Steuergeräte.

Das Master-Steuergerät 3 verfügt über einen programmtechnisch umgesetzten Steueralgorithmus, welcher die Adressvergabe an die Slave-Steuergerät 4-6 anstößt, regelt und überwacht. Das Master-Steuergerät 3 sorgt für die korrekte Adressvergabe an die Slave-Steuergeräte 4-6. Damit ist dem Master-Steuergerät 3 die Abfolge bzw. die Reihenfolge und Anzahl der an das Bussystem 1 geschalteten, zu adressierenden Slave-Steuergeräte 4-6 bekannt.

Die Slave-Steuergeräte 4-6 weisen ein als Schalttransistor bzw. Schalter ausgeführtes Trennmittel 9 auf, mit dem die Datenleitung 2 unterbrochen werden kann. Der Schalter 9 ist zwischen dem Widerstand 11 zur Spannungsversorgungsleitung 8, dem sogenannten "Pullup-Widerstand", und dem LIN-Transceiver 10 positioniert.

Die Steuergeräte 4-6 weisen jeweils eine Messanordnung zur Bestimmung des Differenzspannungspegels U_{MESS} auf, welche als Vergleichsmittel eine Komparatorschaltung aufweist. Die Messanordnung steuert zudem mittels der Steuereinheit 17 in Abhängigkeit des Messergebnisses den Schalter 9 und die Sende-/Empfangseinheit 10.

Die Slave-Steuergeräte 4-6 verfügen über einen programmtechnisch umgesetzten Steueralgorithmus, welcher die von den Slave-Steuergeräten 4-6 auszuführenden Verfahrensschritte, insbesondere Adresseinstellung, Messung des Differenzspanungspegels U_{MESS}, Steuerung des Schalters 9 und des LIN-Transceivers 10 umsetzt.

Die Spannungsversorgungsleitung 8 ist über einen Widerstand 11 mit der Datenleitung 2 verbunden, so dass die LIN- bzw. Datenleitung 2 im Ruhezustand eine definierte Ruhespannung, den sogenannten "rezessiven Pegel", von U_{BAT} = 12V aufweist. Beim Durchschalten des LIN-Transceivers 10, also Senden eines Signals, wird die Datenleitung 2 zur Masseleitung 7 durchverbunden, so dass der Differenzspannungspegel U_{MESS} auf Null bzw. Massepotenzial absinkt, was dem sogenannte "dominanten Pegel" entspricht. Zu beachten ist, dass ein LIN-Transceiver 10 sich wie ein Schalter verhält: Beim Durchschalten, also beim Senden eines dominaten Pegels, wird die Datenleitung 2 mit der Masseleitung verbunden, um das Null-Signal "dominanter Pegel" zu erhalten. Beim Trennen, also beim Senden eines rezessiven Pegels bzw. im Ruhezustand, wird die Datenleitung 2 von der Masseleitung 7 getrennt.

Im Normalzustand, wenn die Steuergeräte 3-6 die gleichberechtigt über die gemeinsam benutzte Datenleitung 2 kommunizieren, sind die LIN-Transceiver 10 der teilnehmenden Master- und Slave-Steuergeräte 3-6 sende- sowie empfangsbereit. Die Schalter 9 zum Auftrennen der Datenleitung 2 sind geschlossen und damit auf Durchgang geschaltet.

Auf eine Nachricht des Master-Steuergeräts 3 auf der gemeinsamen Datenleitung 2 an alle angebundenen Steuergeräte 4-6, wird der Zeitraum für eine Adressvergabe gestartet. Die Nachricht des Master-Steuergeräts 3 enthält bereits die zu vergebende Adresse. Die zu adressierenden Slave-Steuergeräte 4-6 unterbrechen sofort mittels des Schalters 9 die Datenleitung 2. Ab diesem Zeitpunkt können keine Daten gleichberechtigt an alle Steuergeräte 3-6 im Bussystem gesendet werden, da die gemeinsam benutzte Datenleitung unterbrochen ist.

Gleichzeitig wird der LIN-Transceiver 10 der zu adressierenden Slave-Steuergeräte 4-6 durchgeschaltet, so dass eine Verbindung zwischen Masseleitung 7 und Datenleitung 2 erfolgt.

Nun überwachen die Steuergeräte 4-6 den Differenzspannungspegel U_{MESS} an ihrem jeweiligen Ausgang, wobei der Differenzspannungspegel U_{MESS} zwischen der Masseleitung 7 und der Datenleitung 2 zum nachgeschaltetem Steuergerät 4-6 bestimmt wird.

Die Messung des Differenzspannungspegels U_{MESS} erfolgt von dem jeweiligen Slave-Steuergerät 4-6 nach einer für jedes zu adressierende Slave-Steuergerät 4-6 individuell festgelegten und dem jeweiligen Steuergerät 4-6 bekanntgemachten Zeit T_{SG4}, T_{SG5}, T_{SG6}. Jedes Slave-Steuergerät 4-6 entscheidet anhand des Messergebnisses, ob ein weiteres, zu adressierendes Steuergerät nachgeschaltet ist und entscheidet, anhand des Ergebnisses, ob es in diesem Zeitraum der Adressvergabe als zu adressierendes Steuergerät verbleibt oder durch Durchschalten der Datenleitung 2 sich in diesem Zeitraum der Adressvergabe von der Adressvergabe ausschließt.

Da die Messung des Differenzspannungspegels U_{MESS} in jedem Slave-Steuergerät 4-6 nach seiner für das Steuergerät individuell festgelegten Zeit, also für das Steuergerät 4 nach der Zeit T_{SG4}, für das Steuergerät 5 nach der Zeit T_{SG5}, usw. erfolgt, kann die Erkennung, ob ein nachgeschaltetes Steuergerät vorhanden ist, auch bei einem Steuergerät 4-6 an beliebiger Position auf dem Bussystem 1 zuerst abgeschlossen sein.

Hervorzuheben ist, dass die individuellen Zeiten T_{SG4}, T_{SG5}, T_{SG6} einen maximalen Wert T_{MAX} nicht überschreiten. Diese maximale Zeitspanne T_{MAX} ist allen Steuergeräten 3-6 des Bussystems 1 bekannt und richtet sich danach, ab wann das Bussystem 1 für den gemeinsamen Datenverkehr wieder zur Verfügung steht. Zu diesem Zeitpunkt T_{MAX} wird der Datenleitungstrennschalter 9 der Steuergeräte 4-6 geschlossen.

Ist für ein zu adressierendes Steuergerät 4-6, beispielsweise Slave-Steuergerät 5, ein weiteres, nachgeschaltetes, in diesem Zeitraum der Adressvergabe zu adressierendes Slave-Steuergerät 4-6, beispielsweise Steuergerät 6, vorhanden, dann ergibt die Spannungsmessung das Massepotenzial, also einen gemäß LIN-Protokoll dominanten Pegel. Der dominante Pegel ergibt sich, da das nachgeschaltete, zu adressierende Slave-Steuergerät 6 seinen LIN-Transceiver 10 durchgeschaltet hat und die Datenleitung 2 so unterbrochen ist, dass nur noch eine Verbindung zwischen dem "Pullup-Widerstand" 11 des vorgeschalteten Steuergeräts 5 und dem durchgeschalteten LIN-Transceiver 11 des nachgeschalteten Slave-Steuergeräts 6 besteht.

Ist für ein zu adressierendes Steuergerät 4-6, beispielsweise Steuergerät 5, kein nachgeschaltetes oder ein in diesem Zeitraum der Adressvergabe nicht bzw. nicht mehr zu adressierendes Slave-Steuergerät 4-6, beispielsweise Steuergerät 6, vorhanden, ergibt die Messung, die an der Datenleitung 2 über den Widerstand 11 anliegende Versorgungsspannung, also einen gemäß LIN-Protokoll rezessiven Pegel. Der rezessive Pegel ergibt sich, da das nachgeschaltete, an der Adressierung nicht teilnehmenden Slave-Steuergeräte, die in dem jeweiligen Steuergerät verlaufende Datenleitung 2 durchgeschalten haben und der jeweilige LIN-Transceiver 10 nicht mehr durchgeschaltet ist.

Damit entspricht die Messung des Differenzspannungspegels U_{MESS} einer Spannungsmessung mittels eines Spannungsteilers. Der Spannungsteiler wird von zwei zwischen Masseleitung 7 und Spannungsversorgungsleitung 8 in Reihe geschalteten Widerständen gebildet, wobei der "erste Widerstand" dem Pullup-Widerstand 11 eines Steuergeräts und der "zweite Widerstand" dem LIN-Transceiver 10 des nachgeschalteten Steuergeräts entspricht. Der gemessene Spannungspegel am Spannungsmesspunkt zwischen dem Widerstand 11 und dem LIN-Transceiver 10 wird durch die Schaltung des LIN-Transceivers 10, also offen oder geschlossen, bestimmt.

Ist aufgrund des Messergebnisses im beispielhaften Steuergerät 5 ein nachgeschaltetes, zu adressierendes Steuergerät 6 vorhanden, wird im Steuergerät 5 der LIN-Transceiver 10 abgeschaltet und mittels des Schalters 9 die Datenleitung 2 durchgeschalten. Am Steuergerät 5 wird damit in diesem Zeitraum der Adressvergabe keine Adresseinstellung vorgenommen. Es muss auf einen weiteren Zeitraum der Adressvergabe warten.

Abhängig von ihrer jeweiligen Zeit T_{SG4}, T_{SG5}, T_{SG6} schalten so die zu adressierenden Steuergeräte 4-6 die Datenleitung 2 durch und LIN-Transceiver 10 ab, bis am Ende nur noch das vom Master-Steuergerät 3 aus gesehene in dem Adressierungszyklus letztgeschaltete, zu adressierende Steuergerät 4 seinen LIN-Transceiver 10 durchgeschaltet und die Datenleitung 2 unterbrochen hat.

Bei diesem Steuergerät, beispielsweise Steuergerät 5, bleibt die Datenleitung 2 unterbrochen und der LIN-Transceiver 10 durchgeschaltet, bis die Zeit T_{MAX} abgelaufen ist. Dann wird die mit der Startnachricht für den Zeitraum der Adressvergabe übermittelte Adresse übernommen. Die Adressierung ist für das Steuergerät 5 abgeschlossen. Das Steuergerät 5 beteiligt sich bei weiteren Adressierungszyklen veranlasst durch das Master-Steuergerät 3 nicht mehr. Im Zeitraum der Adressvergabe wird das Steuergerät 5 seinen LIN-Transceiver 10 nicht mehr einschalten; Steuergerät 5 sendet im Zeitraum der Adressvergabe nicht. Auch die Datenleitung 2 bleibt im Steuergerät 5 für den Zeitraum der Adressvergabe durchverbunden.

In weiteren Zyklen können nun die verbliebenen, noch nicht adressierten Steuergeräte, beispielsweise Steuergerät 4, adressiert werden. So erkennt jetzt im folgenden Zyklus Slave-Steuergerät 4 nach der Zeit T_{MAX}, dass kein nachgeschaltetes, zu adressierenders Slave-Steuergerät 5,6 vorhanden ist, da die Differenzspannungsmessung am Ausgang des Slave-Steuergeräts 4 keinen dominanten Pegel ergibt. Das Slave-Steuergerät 4 übernimmt nun die vom Master-Steuergerät 3 übermittelte Adresse.

Mit diesem Verfahren wird die Adressvergabe beginnend mit dem vom Master-Steuergerät 3 aus gesehen letztgeschalteten, zu adressierenden Slave-Steuergerät 6 gestartet. Die letzte Adressvergabe entspricht der Adressierung des vom Master-Steuergerät 3 aus gesehen erstgeschalteten, zu adressierenden Slave-Steuergeräts 4.

Die Reihenfolge der Slave-Steuergeräte 4-6 in der Verbindungsanordnung auf dem Bussystem ist für die Adressierung ausschlaggebend. In jedem Adressierungszyklus wird immer das vom Master aus gesehen letztgeschaltete, zu adressierende Steuergerät adressiert, da dieses Steuergerät kein nachgeschaltetes zu adressierendes Steuergerät feststellen kann.

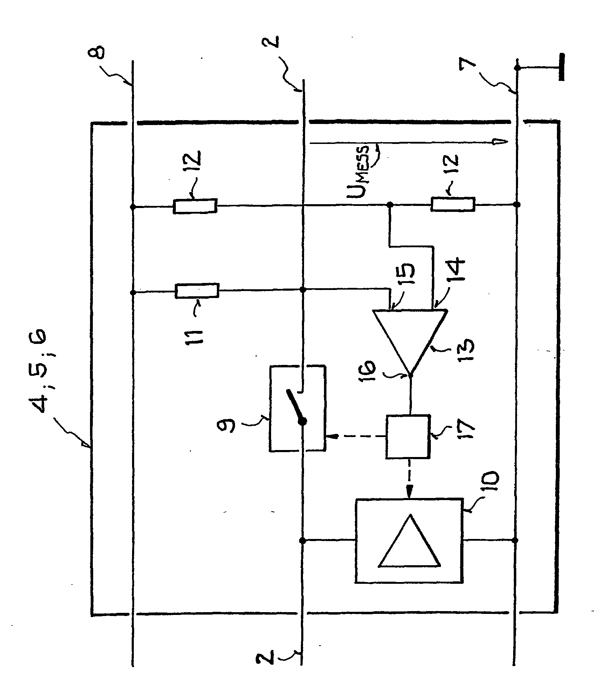

In Figur 2 ist beispielhaft eine Messanordnung dargestellt, wie diese in den Steuergeräten 4-6 ausgeführt ist. Die Messanordnung weist einen Komparator 13 mit zwei Eingängen 14, 15 und einem Ausgang 16 auf. Das Ausgangssignal 16 des Komparators 13 ist über eine Leitung mit einer Steuereinheit 17 verbunden, welche in Abhängigkeit des Komparator-Ausgangssignals den Schalter 9 und die Sende-/Empfangseinheit 10 des jeweiligen Steuergeräts 4;5;6 steuert. Hierzu ist ein Eingang des Komparators 15 auf das Potenzial der Datenleitung 2 am Ausgang des Steuergeräts 4;5;6 gelegt, welches einen rezessiven oder dominanten Spannungspegel hat. Ein Eingang des Komparators 14 ist konstant auf die Ruhespannung von U_{BATT} = 12V, also auf einen rezessiven Pegel gelegt, welcher zwischen Masseleitung 7 und Spannungsversorgungsleitung 8 über Widerstände 12 eines Spannungsteilers abgegriffen wird. Aus dem Vergleich der beiden Eingangssignale ermittelt der Komparator ein Ausgangssignal, welches angibt, ob am Eingangssignal 15 eine rezessiver oder dominanter Spannungspegel anliegt. Entsprechend diesem Ausgangssignal schaltet die Steuereinheit den Schalter 9 und die Sende-/Empfangseinheit 10.

Dem Master-Steuergerät 3 ist die Reihenfolge bzw. die Anordnung der Slave-Steuergeräte 4-6 im Verhältnis zum Master-Steuergerät 3 bekannt. Damit ist das Master-Steuergerät 3 in der Lage die Adressvergabe entsprechend den Vorgabeh an den Slave-Steuergeräten 4-6 auszuführen.

Das Verfahren ist nicht auf Bussystemen nach dem LIN-Protokoll beschränkt. Vielmehr kann es ebenfalls auf Bussystemen wie CAN (Controler Area Network), FlexRay, TTP (Time Triggered Protocol), D2B (Domestic Digital Bus), MOST (Media Oriented Systems Transport) eingesetzt werden, da deren Datenkommunikation auf Ein- oder Zweidraht-Datenleitungen basiert. Bei Bussystemen mit Zweidraht-Datenleitungen, wie beispielsweise CAN, muss der Schalter 9 für beide Datenleitungen vorhanden sein.

Die Sende-/Empfangseinheit 10, hier als LIN-Transceiver ausgeführt, richtet sich nach dem gewählten Busprotokoll und Bussystem.

Der Schalter 9 zum schaltbaren Trennen der Datenleitung 2 ist als Schalttransistor ausgeführt. Der Schalter kann aber auch als Relais ausgeführt sein. Für Bussysteme, deren Datenleitung 2 als optische Datenleitung ausgebildet ist, ist es von Vorteil den Schalter als Repeater auszuführen, der die Daten während der Adressierung, also beim Trennen, nicht weiterleitet.

Das Ausführungsbeispiel ist als "Daisy-Chain"-Verbindung mit in Reihe geschalteten Steuergeräten 3-6 ausgeführt, wobei das Master-Steuergerät 3 am einen Ende der Reihenschaltung positioniert ist und die Slave-Steuergeräte 4-6 sich an das Master-Steuergerät 3 in nur einer Richtung nachgeschalten sind.

Das Verfahren ist aber auch bei Bussystemen einsetzbar, in denen im Falle einer Reihenschaltung die Slave-Steuergeräte 4-6 links und rechts des Master-Steuergeräts 3 befinden. In diesem Fall verhält sich das Master-Steuergerät 3 im Zeitraum der Adressvergabe einfach wie ein nicht zu adressierendes Steuergerät. Das Master-Steuergerät unterbricht im Zeitraum der Adressvergabe nicht die Datenleitung und schaltet auch seine Sendeeinheit nicht ein. Damit ist bei Bussystemen mit in Reihenschaltung angeordneten Steuergeräten für das Master-Steuergerät kein Trennmittel, also keine zusätzliche Modifikation, erforderlich.

Bei Bussystemen, welche in ringförmiger Topologie aufgebaut sind, muss das Master-Steuergerät, also das Steuergerät, welches die Adressierung anstößt, die Datenbusleitung und damit den Ring unterbrechen, ohne seine Sendeeinheit zuzuschalten. Das Master-Steuergerät müsste also wie die Slave-Steuergeräte ein Trennmittel zum Trennen der Datenleitung aufweisen.

Die Messanordnung zur Messung der elektrischen Kenngrößen kann in einem Eindraht-Datenleitungssystem wie das LIN-Bussystem auch als Strommesseinrichtung ausgebildet sein. Hierbei misst die Messanordnung den Strom, der vom Ausgang des vorgeschalteten Slave-Steuergeräts zum Eingang des nachgeschalteten Slave-steuergeräts fliest.

Das Vergleichsmittel ist im Ausführungsbeispiel als Komparatorschaltung ausgeführt. Der Vergleich kann aber auch softwaretechnisch, also mittels eines Programms durchgeführt werden. In diesem Fall ist das Vergleichsmittel der Prozessor mit dem darauf laufenden Softwareprogramm, welches den Vergleich durchführt.

Zudem können Steuereinheit 17 und Vergleichsmittel 13 als ein Hardware-Baustein, bspw. ASIC, zusammengefasst sein. Dies bietet sich insbesondere dann an, wenn der Vergleich softwaretechnisch durchgeführt wird.

Die zu vergebende Adresse wird im Ausführungsbeispiel bei jedem Start des Zeitraums der Adressvergabe mit dem Startsignal mitgegeben. Die zu vergebende Adresse kann auch durch einen im Slave-Steuergerät implementierten Algorithmus berechnet werden, wobei die zu vergebende Adresse aktuell mittels des Algorithmus automatisch gebildet wird. Beispiel für einen solchen Algorithmus ist eine Adresszählerinkrementierung. Die Adressvergabe mittels eines im Slave-Steuergerät implementierten Algorithmusses bietet sich insbesondere in Verbindung mit einer automatischen Ablaufsteuerung der Adressierungszyklen an. Hierbei stößt der Master die Adressierung nur einmal an. Danach wiederholen die nicht adressierten Slaves diesen Zyklus nach einer gemeinsamen Wartezeit Tzyk, die größer als T_{MAX} sein muss, die Adressvergabe, bis das letzte Slave-Steuergerät adressiert ist.

## Patentansprüche

1. Verfahren zur automatischen Adressvergabe von an ein Bussystem (1) angeschlossenen Steuergeräten (3-6) in einem Verkehrsmittel, wobei
- die Steuergeräte (3-6) Daten mittels Sende-/Empfangseinheiten (10) über eine gemeinsame Datenbusleitung (2) austauschen,
- die Steuergeräte (3-6) gleichzeitig auf die, mittels der gemeinsamen Datenbusleitung (2), gesendeten Daten zugreifen,
**dadurch gekennzeichnet,**
- **dass** ein Zeitraum einer Adressvergabe mittels einer Nachricht auf der gemeinsamen Datenbusleitung (2) gestartet wird,
- **dass** aufgrund der Nachricht im Zeitraum der Adressvergabe die gemeinsame Datenbusleitung (2) in einzelne Teilabschnitte galvanisch aufgetrennt wird, indem die zu adressierenden Steuergeräte (4-6) jeweils mittels eines Trennmittels (9) die gemeinsame Datenbusleitung (2) galvanisch auftrennen und
- die zu adressierenden Steuergeräte (4-6) ihre jeweilige Sendeeinheit (10) auf ein Sendepotenzial legen.

2. Verfahren nach Anspruch 1,
**dadurch gekennzeichnet,**
**dass** im Zeitraum der Adressvergabe
- mindestens ein zu adressierendes Steuergerät (4;5;6) nach einer individuell für das eine Steuergerät (4;5;6) festgelegten Zeit T_{SG} mittels Messung einer elektrischen Kenngröße prüft, ob ein nachgeschaltetes, zu adressierendes Steuergerät (4-6) vorhanden ist und
- bei Nichtvorhandensein eines nachgeschalteten, zu adressierenden Steuergeräts (4-6) sich eine Adresse zuweist.

3. Verfahren nach Anspruch 1 bis 2,
**dadurch gekennzeichnet,**
**dass** als elektrische Kenngröße ein Differenzspannungspegel (U_{MESS}) am Ausgang zum nachgeschalteten Steuergerät(4-6) bestimmt wird, wie er zur Bestimmung einer Nachrichtenübermittlung gemäß dem Bussystem (1) auf der Datenbusleitung (2) erfolgt.

4. Verfahren nach Anspruch 1 bis 3,
**dadurch gekennzeichnet,**
**dass** als elektrische Kenngröße der Strom (I_{MESS}) auf der Datenleitung (2) am Ausgang zum nachgeschalteten Steuergerät gemessen wird, wenn die Datenbusleitung (2) als Eindraht-Datenleitung ausgeführt ist.

5. Verfahren nach Anspruch 1 bis 4,
**dadurch gekennzeichnet,**
**dass** bei Vorhandensein eines nachgeschalteten, zu adressierenden Steuergeräts (4-6), die Datenbusleitung (2) in dem einen, zu adressierenden Steuergerät (4;5;6) mittels des Trennmittels (9) geschlossen wird und die Sendeeinheit der Sende-/Empfangseinheit (10) des einen, zu adressierenden Steuergeräts (4;5;6) abgeschalten wird.

6. Verfahren nach Anspruch 1 bis 5,
**dadurch gekennzeichnet,**
**dass** das Trennmittel (9) als Schalttransistor oder Relais oder Repeater ausgeführt wird.

7. Verfahren nach Anspruch 6,
**dadurch gekennzeichnet,**
**dass** Steuergeräte (3-6), welche nicht an der Adressvergabe teilnehmen, im Zeitraum der Adressvergabe keine Signale auf die Datenbusleitung (2) senden.

8. Verfahren nach Anspruch 1 bis 7,
**dadurch gekennzeichnet,**
**dass**
- nach einer Zeit T_{MAX} die Trennmittel (9) der zu adressierenden Steuergeräte (4-6) geschlossen und deren Sendeeinheit abgeschalten werden und
- die Zeit T_{MAX} größer als irgendeine der individuell für die zu adressierenden Steuergeräte (4-6) festgelegten Zeit T_{SG} gewählt wird.

9. Verfahren nach Anspruch 1 bis 8,
**dadurch gekennzeichnet,**
**dass** bei der Adressvergabe die Adresse des zu adressierenden Steuergeräts (4-6) durch
- Übernahme einer beim Start des Zeitraums der Adressvergabe von einem Steuergerät (3) übermittelten Adresse oder
- Hochzählen einer am Beginn eines Adressierungszyklusses von einem Steuergerät (3) gesendeten Adresse erfolgt.

10. Verfahren nach Anspruch 1 bis 9,
**dadurch gekennzeichnet,**
**dass** der Zeitraum der Adressvergabe als Teil eines Adressierungszyklusses ausgeführt wird und mittels einer automatischen Ablaufsteuerung wiederholt gestartet wird.

11. Verfahren nach Anspruch 10,
**dadurch gekennzeichnet,**
**dass** nach einer bestimmten Zeit T_{ZYK} der Zeitraum der Adressvergabe erneut gestartet wird, wobei T_{ZYK} größer als T_{MAX} zu wählen ist.

12. Bussystem für Steuergeräte (3-6) in einem Verkehrsmittel, wobei
- die Steuergeräte (3-6) über eine gemeinsame Datenbusleitung (2) verbunden sind,
- die Steuergeräte (3-6) Sende-/Empfangseinheiten (10) aufweisen, mittels derer die Steuergeräte (3-6) gleichzeitig auf die über die gemeinsame Datenbusleitung (2) gesendeten Daten zugreifen,
- wobei mindestens ein Steuergerät(4;5;6) Trennmittel (9) zum schaltbaren Trennen der Datenbusleitung (2) aufweist und
- das mindestens eine Steuergerät (4;5;6) eine Messanordnung aufweist, welche ein elektrisches Strom- oder Spannungssignal (I_{MESS}, U_{MESS}) auf der Datenbusleitung (2) am Ausgang zum nachgeschaltetem Steuergerät (4;5;6) misst,
**dadurch gekennzeichnet,**
**dass** die Messanordnung Mittel zum Steuern des Trennmittels (9) und der Sende-/Empfangseinheit (10) des einen Steuergeräts (4;5;6) aufweist, welche aufgrund der Auswertung der Messsignale das Trennmittel (9) sowie die Sende-/Empfangseinheit (10) steuert.

13. Bussystem nach Anspruch 12,
**dadurch gekennzeichnet,**
**dass** die Messanordnung ein Vergleichsmittel (13) aufweist, welchem als ein Eingangssignal (15) der Spannungspegel auf der Datenbusleitung (2) am Ausgang des einen Steuergeräts zugeführt ist, wobei das Ausgangssignal (16) des Vergleichsmittels (13) das Eingangssignal zur Steuerung des Trennmittels (9) und der Sende-/Empfangseinheit (10) bildet.

14. Bussystem nach Anspruch 12 oder 13,
**dadurch gekennzeichnet,**
**dass** das Trennmittel (9) als Schalttransistor oder Relais oder Repeater ausgeführt ist.

## Claims

1. Method for automatic address allocation by control appliances (3-6) connected to a bus system (1) in a means of transport, where
- the control appliances (3-6) interchange data using transmission/reception units (10) via a common data bus line (2),
- the control appliances (3-6) simultaneously access the data sent using the common data bus line (2),
**characterized**
- **in that** a period of address allocation is started by means of a message on the common data bus line (2),
- **in that** the message is taken as a basis, in the period of address allocation, for electrically breaking the common data bus line (2) into individual subsections by virtue of the control appliances (4-6) which are to be addressed using a respective isolating means (9) for the purpose of electrically breaking the common data bus line (2), and
- the control appliances (4-6) which are to be addressed place their respective transmission unit (10) at a transmission potential.

2. Method according to Claim 1,
**characterized**
**in that** in a period of address allocation
- at least one control appliance (4; 5; 6) which is to be addressed measures an electrical parameter after a time T_{SG} which is individually stipulated for the control appliance (4; 5; 6) in question in order to check whether there is a downstream control appliance (4-6) which is to be addressed, and
- allocates itself the address if there is no downstream control appliance (4-6) which is to be addressed.

3. Method according to either of Claims 1 and 2,
**characterized**
**in that** the electrical parameter determined is a differential voltage level (U_{MEAS}) at the output to the downstream control appliance (4-6), as is obtained for determining message transmission in line with the bus system (1) on the data bus line (2).

4. Method according to Claims 1 to 3,
**characterized**
**in that** the electrical parameter measured is the current (I_{MEAS}) on the data line (2) at the output to the downstream control appliance, when the data bus line (2) is in the form of a single-wire data line.

5. Method according to Claims 1 to 4,
**characterized**
**in that** if there is a downstream control appliance (4-6) which is to be addressed then the data bus line (2) is closed, using the isolating means (9), in the control appliance (4; 5; 6) in question which is to be addressed, and the transmission unit in the transmission/reception unit (10) in the control appliance (4; 5; 6) in question which is to be addressed is turned off.

6. Method according to Claims 1 to 5,
**characterized**
**in that** the isolating means (9) is in the form of a switching transistor or a relay or a repeater.

7. Method according to Claim 6,
**characterized**
**in that** control appliances (3-6) which are not involved in the address allocation do not send any signals to the data bus line (2) in the period of address allocation.

8. Method according to Claims 1 to 7,
**characterized**
**in that**
- after a time T_{MAX} the isolating means (9) in the control appliances (4-6) which are to be addressed are closed and the latter's transmission units are turned off, and
- the time T_{MAX} is chosen to be greater than any of the times T_{SG} which are individually stipulated for the control appliances (4-6) which are to be addressed.

9. Method according to Claims 1 to 8,
**characterized**
**in that** during address allocation the address of the control appliance (4-6) which is to be addressed is obtained by
- transferring an address transmitted by a control appliance (3) at the start of the period of address allocation or
- incrementing an address sent by a control appliance (3) at the start of an addressing cycle.

10. Method according to Claims 1 to 9,
**characterized**
**in that** the period of address allocation is produced as part of an addressing cycle and is started repeatedly by means of automatic flow control.

11. Method according to Claim 10,
**characterized**
**in that** after a particular time T_{CYC} the period of address allocation is restarted, with T_{CYC} needing to be chosen to be greater than T_{MAX}.

12. Bus system for control appliances (3-6) in a means of transport, where
- the control appliances (3-6) are connected by means of a common data bus line (2),
- the control appliances (3-6) have transmission/reception units (10) which the control appliances (3-6) use for simultaneously accessing the data sent via the common data bus line (2),
- where at least one control appliance (4; 5; 6) has isolating means (9) for switchably interrupting the data bus line (2), and
- the at least one control appliance (4; 5; 6) has a measuring arrangement which measures an electrical current or voltage signal (I_{MEAS}, U_{MEAS}) on the data bus line (2) at the output to the downstream control appliance (4; 5; 6),
**characterized**
**in that** the measuring arrangement has means for controlling the isolating means (9) and the transmission/reception unit (10) in the control appliance (4; 5; 6) in question, which means take the evaluation of the measured signals as a basis for controlling the isolating means (9) and the transmission/reception unit (10).

13. Bus system according to Claim 12,
**characterized**
**in that** the measuring arrangement has a comparison means (13) to which the voltage level is supplied as an input signal (15) on the data bus line (2) at the output of the control appliance in question, the output signal (16) from the comparison means (13) forming the input signal for controlling the isolating means (9) and the transmission/reception unit (10).

14. Bus system according to Claim 12 or 13,
**characterized**
**in that** the isolating means (9) is in the form of a switching transistor or a relay or a repeater.

## Revendications

1. Procédé pour l'attribution automatique d'adresses à des appareils de commande (3 - 6) raccordés à un système de bus (1) dans un moyen de transport, dans lequel
- les appareils de commande (3 - 6) échangent des données au moyen d'unités d'émission/réception (10) par l'intermédiaire d'une ligne de bus de données commune (2),
- les appareils de commande (3 - 6) accèdent simultanément aux données émises au moyen de la ligne de bus de données commune (2),
**caractérisé en ce que**
- on commence une durée d'attribution d'adresse au moyen d'une information sur la ligne de bus de données commune (2),
- en se basant sur l'information pendant la durée de l'attribution d'adresse, on coupe galvaniquement la ligne de bus de données commune (2) en segments individuels **en ce que** chacun des appareils de commande à adresser (4 - 6) coupe galvaniquement la ligne de bus de données commune (2) au moyen d'un moyen de coupure (9) et
- les appareils de commande à adresser (4 - 6) placent leur unité d'émission (10) respective à un potentiel d'émission.

2. Procédé selon la revendication 1, **caractérisé en ce que** pendant la durée de l'attribution d'adresse,
- au moins un des appareils de commande à adresser (4 ; 5 ; 6) vérifie au moyen d'une mesure d'une grandeur électrique caractéristique s'il existe un appareil de commande à adresser (4 - 6) branché en aval après un temps T_{SG} défini individuellement pour cet appareil de commande à adresser (4 ; 5 ; 6) et
- s'il n'existe pas d'appareil de commande à adresser (4 - 6) branché en aval, il s'affecte une adresse.

3. Procédé selon les revendications 1 à 2, **caractérisé en ce qu'**on définit comme grandeur électrique caractéristique, un niveau de tension différentielle (U_{MESS}) à la sortie vers l'appareil de commande (4 - 6) branché en aval, similaire à la définition de la transmission d'informations sur la ligne de bus de données (2) selon le système de bus (1).

4. Procédé selon les revendications 1 à 3, **caractérisé en ce qu'**on mesure comme grandeur électrique caractéristique, le courant (I_{MESS}) sur la ligne de bus de données (2) à la sortie vers l'appareil de commande branché en aval, lorsque la ligne de bus de données (2) est réalisée sous la forme d'une ligne de données à un fil.

5. Procédé selon les revendications 1 à 4, **caractérisé en ce que** lors de l'existence d'un appareil de commande à adresser (4 - 6) branché en aval, la ligne de bus de données (2) est fermée par les moyens de coupure (9) dans l'unique appareil de commande à adresser (4 ; 5 ; 6) et l'unité d'émission de l'unité d'émission/réception (10) de l'unique appareil de commande à adresser (4 ; 5 ; 6) est débranchée.

6. Procédé selon les revendications 1 à 5, **caractérisé en ce que** le moyen de coupure (9) est réalisé sous forme d'un transistor de commutation ou d'un relais ou d'un répéteur.

7. Procédé selon la revendication 6, **caractérisé en ce que** des appareils de commande (3 - 6) qui ne participent pas à l'attribution des adresses n'envoient pas de signaux sur la ligne de bus de données (2) pendant la durée de l'attribution des adresses.

8. Procédé selon les revendications 1 à 7, **caractérisé en ce que**
- après un temps T_{MAX}, on ferme les moyens de coupure (9) des appareils de commande à adresser (4 - 6) et on débranche leur unité d'émission et
- on choisit le temps T_{MAX} supérieur à n'importe quel temps individuel T_{SG} défini pour les appareils de commande à adresser (4 - 6).

9. Procédé selon les revendications 1 à 8, **caractérisé en ce que** lors de l'attribution d'adresses, l'adresse de l'appareil de commande à adresser (4 - 6) a lieu par
- la récupération d'une adresse transmise à partir d'un appareil de commande (3) au début de la durée d'attribution d'adresses ou
- incrémentation d'une adresse envoyée à partir d'un appareil de commande (3) au début d'un cycle d'adressage.

10. Procédé selon les revendications 1 à 9, **caractérisé en ce que** la durée d'attribution d'adresses est exécutée sous la forme d'une partie d'un cycle d'adressage et redémarre au moyen d'une commande de déroulement automatique.

11. Procédé selon la revendication 10, **caractérisé en ce qu'**après un certain temps T_{ZYK}, la durée d'attribution d'adresses redémarre, T_{ZYK} devant être choisi supérieur à T_{MAX}.

12. Système de bus pour des appareils de commande (3 - 6) dans un moyen de transport, dans lequel
- les appareils de commande (3 - 6) sont reliés par l'intermédiaire d'une ligne de bus de données commune (2),
- les appareils de commande (3 - 6) possèdent des unités d'émission/réception (10) permettant aux appareils de commande (3 - 6) d'accéder simultanément aux données émises au moyen de la ligne de bus de données commune (2),
- dans lequel au moins un des appareils de commande (4 ; 5 ; 6) possède un moyen de coupure (9) pour pouvoir commuter la coupure de la ligne de bus de données (2), et
- au moins l'unique appareil de commande (4 ; 5 ; 6) possède un arrangement de mesure qui mesure un signal électrique de courant ou de tension (I_{MESS}, U_{MESS}) sur la ligne de bus de données (2) à la sortie vers l'appareil de commande (4 ; 5 ; 6) branché en aval,
**caractérisé en ce que**
- l'arrangement de mesure possède des moyens pour commander le moyen de coupure (9) et l'unité d'émission/réception (10) de l'unique appareil de commande (4 ; 5 ; 6), qui commandent le moyen de coupure (9) ainsi que l'unité d'émission/réception (10) en se basant sur le traitement des signaux de mesure.

13. Système de bus selon la revendication 12, **caractérisé en ce que** l'arrangement de mesure possède un moyen de comparaison (13) auquel on achemine comme un signal d'entrée (15) le niveau de tension sur la ligne de bus de données (2) à la sortie de l'unique appareil de commande, le signal de sortie (16) du moyen de comparaison (13) constituant le signal d'entrée pour la commande du moyen de coupure (9) et de l'unité d'émission/réception (10).

14. Système de bus selon la revendication 12 ou 13, **caractérisé en ce que** le moyen de coupure (9) est réalisé sous forme d'un transistor de commutation ou d'un relais ou d'un répéteur.
